# EUROPÄISCHE PATENTSCHRIFT

(11) **EP 1 944 776 B1**
(45) Veröffentlichungstag und Bekanntmachung des Hinweises auf die Patenterteilung: **09.12.2009**
(21) Anmeldenummer: 07405011.3
(22) Anmeldetag: 15.01.2007
(51) Int. Cl.: H01C 10/14, F16H 13/08

(54) **Getriebe-Einheit und Verwendung derselben**
Transmission unit and application of the same
Unité d'entraînement et son utilisation

(43) Veröffentlichungstag der Anmeldung: 16.07.2008
(73) Patentinhaber: Optosys SA, 1762 Givisiez (CH)
(72) Erfinder: Rhème, Charles, 1725 Posieux (CH); Heimlicher, Peter, 1700 Fribourg (CH); Bochud, Roland, 1757 Noréaz (CH)
(74) Vertreter: AMMANN PATENTANWÄLTE AG BERN

(56) Entgegenhaltungen:
- GB-A- 550 234
- JP-A- 57 173 654
- US-A- 2 935 714
- US-A- 3 951 001

## Beschreibung

Die Erfindung betrifft eine Getriebe-Einheit für die Kombination mit einem manuell einstellbaren, elektrischen Bauelement mit einem Untersetzungsgetriebe, sowie die Verwendung derselben. Die abhängigen Ansprüche geben Ausgestaltungen der Erfindungen an.

Untersetzungsgetriebe zum präziseren Einstellen von manuell betätigbaren, elektrisch/ elektronischen Geräten sind seit Jahrzehnten bekannt. So zeigt beispielsweise die GB 550 234 von 1942 ein solches Getriebe zum Einstellen eines Dreh-Kondensators bzw. zum Tunen eines Radio-Apparates. Dieses Getriebe umfasst eine mittels eines Drehknopfes drehbare Einstell-Welle mit einem rillenförmig vertieften Antriebsbereich. In diesem sind Kugeln adhäsiv angeordnet, die aussen ebenfalls adhäsiv in einen feststehenden Laufring eingreifen. Die Kugeln sind durch einen Kugelkäfig geführt, der mittels einer Madenschraube mit der Welle des Dreh-Kondensators drehfest verbunden ist. Bei Drehung der Einstell-Welle rollen die Kugeln zwangsweise sowohl auf dem Antriebsbereich als auch auf dem Laufring ab, wobei sie mit verminderter Winkelgeschwindigkeit den Kugelkäfig sowie den Dreh-Kondensator mitnehmen.

Ein vergleichbares neueres Untersetzungsgetriebe der gleichen Art ist in der US 3 951 001 von 1976 beschrieben. Bei diesem ist eine Schraubenfeder vorgesehen, die den Adhäsionsdruck zwischen den Kugeln und den Laufflächen vergrössert.

Eine Aufgabe der Erfindung besteht darin, eine Getriebe-Einheit unter Verwendung der genannten Art von Untersetzungsgetrieben anzugeben, die in zeitgemässer elektrisch/elektronischer Bauweise aufgebaut und dimensioniert ist und deren Ausmasse die Grösse von 1 x 1 x 1 cm nicht wesentlich überschreiten. Die Einheit soll weiter mit verschiedenen elektrisch/elektronischen Bauelementen problemlos kombinierbar sein und den EMC-Normen bezüglich Spannungsfestigkeit voll entsprechen.

Eine solche Getriebe-Einheit wird durch den unabhängigen Anspruch 1 definiert. Diese Getriebe-Einheit bildet ein eigenständiges, mechanisches Bauelement, das zum Kombinieren mit Bauelementen auf Leiterplatten, insbesondere mit Drehpotentiometern geeignet ist.

In einer bevorzugte Ausführung soll die Getriebe-Einheit robust und spritzwasserdicht und somit für rauhe Betriebsbedingungen geeignet sein. Dazu ist die Getriebe-Einheit gemäss Anspruch 2 mit einer Gehäuse-Einheit ausgerüstet, die einen robusten Schutz der inneren Bestandteile gegenüber allen äusseren Einflüssen darstellt. Weiter ist die Einheit gegenüber Stössen resistent, da sie keine Teile aufweist, die gegeneinander freies Spiel aufweisen.

Im Folgenden wird die Erfindung anhand eines Ausführungsbeispiels näher beschrieben.
- Fig. 1: zeigt eine perspektivische Explosions-Darstellung einer Getriebe-Einheit gemäss Erfindung;
- Fig. 2: zeigt einen zentralen Querschnitt durch die zusammengebaute Getriebe-Einheit von Figur 1;
- Fig. 3: zeigt eine Aufsicht auf die Getriebe-Einheit von Figur 1.

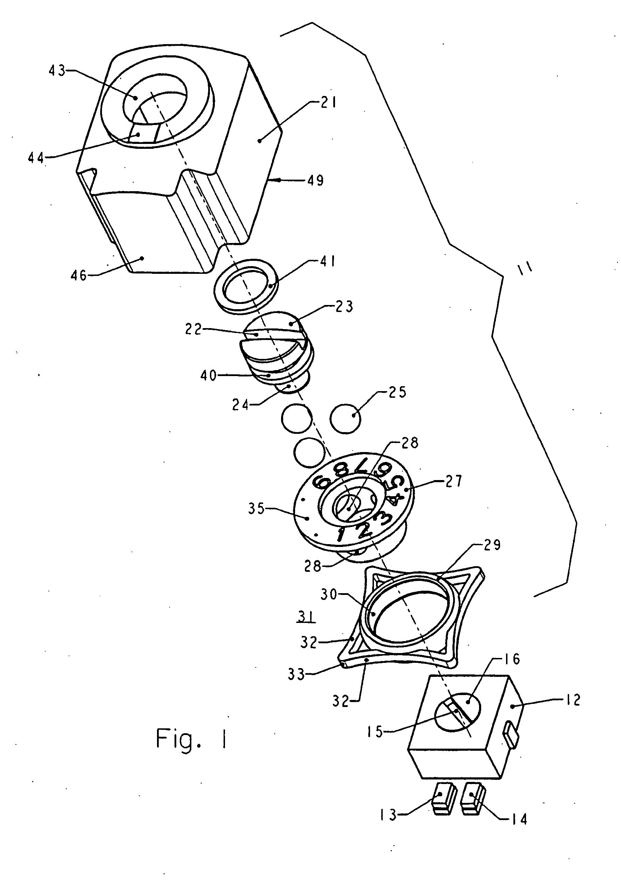

Fig. 1 zeigt eine perspektivische Explosions-Darstellung der Getriebe-Einheit 11 und eines mit diesem gekoppelten elektrisch/elektronischen Bauelements 12, insbesondere eines Drehwiderstandes bzw. eines Drehpotentiometers. Dieses Bauelement 12 ist ausgebildet zur Montage auf einer ebenen, nicht gezeigten Leiterplatte, auf der weiter zwei Leuchtdioden (LED) 13, 14 montiert sein können. Das elektrische Bauelement 12 weist in seiner Verstell-Achse 16 zum Zweck einer manuellen Einstellbarkeit einen Schlitz 15 auf, in den beispielsweise ein Schraubendreher einschiebbar ist.

Die Getriebe-Einheit 11 umfasst vor allem eine Gehäuse-Einheit 21, eine Einstell-Welle 23, drei Kugeln 25, einen Kugelkäfig 27 und ein Laufring-Element 29.

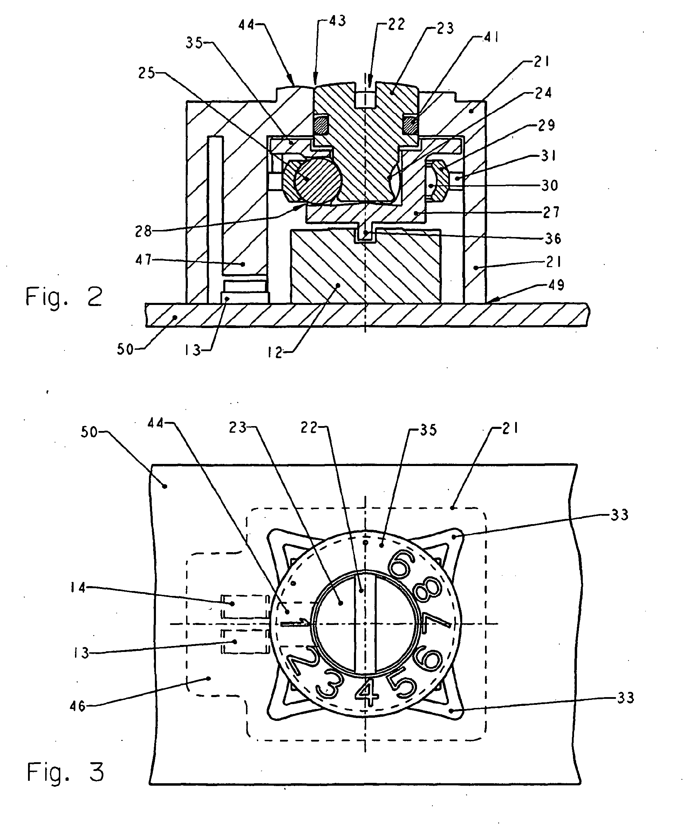

In Fig. 2 wird die Getriebe-Einheit 11 in zusammengesetzter Weise gezeigt. Der Antriebs-Bereich 24 der Einstell-Welle 23, die Lauffläche 30' des Laufring-Elementes 29, der Kugelkäfig 27 mit radial ausgerichteten Querbohrungen 28 und die in den Querbohrungen 28 geführten und zwischen dem Antriebs-Bereich 24 und der Lauffläche 30' mit leichtem Druck gehaltenen Kugeln 25 bilden zusammen ein Untersetzungsgetriebe.

Der Kugelkäfig 27 umfasst einen zylindrischen Bereich, in dem in radialer Richtung die Querbohrungen 28 angeordnet sind, bevorzugt drei Bohrungen. Der Kugelkäfig 27 umfasst weiter eine Scheibe 35 mit Skala, die als fortlaufende Zahlenreihe dargestellt ist, und ein Kupplungs-Element 36, insbesondere in Form einer Schraubendreher-Spitze, zum Eingreifen in den Mitnahme-Schlitz 15 des elektrischen Bauelementes 12.

Zum Drehen der Einstell-Welle 23 der Getriebe-Einheit 11 dient ein Schlitz 22 als einfachste Art eines Eingabe-Mittels. Die Welle 23 umfasst weiter eine Ringnut 40, in die ein elastischer Ring 41, beispielsweise ein handelsüblicher O-Ring, eingelegt ist.

Die Einstell-Welle 23 ist mit ihrem O-Ring 41 drehbar und vor allem spritzwasserdicht in einer Öffnung 43 des Gehäuses 21 gelagert. Dieses Gehäuse 21 weist neben der Öffnung 43 einen transparenten Bereich 44 auf, über den jeweils eine Ziffer der Skalen-Scheibe 35 sichtbar ist.

Das Gehäuse 21 weist in seinem Inneren eine Halterung für das Laufring-Element 29 auf, die die Lauffläche 30' drehfest und elastisch, orthogonal und mittig zur Einstell-Welle 23 ausgerichtet hält. Hierzu besitzt das Laufring-Element 29 vier Feder-Bereiche 31 mit jeweils zwei Feder-Schenkeln 32 und einer gemeinsamen Spitze 33. Die Schenkel 32 sind nach aussen konkav gebogen. Sie münden tangential und damit flach in den Laufring 30 ein, während die Schenkel 32 an den Spitzen 33 einen Winkel von weniger als 90° einschliessen.

Durch diesen Aufbau ergeben sich relativ grosse Federbereiche und eine gute Fixierung in den rechteckigen Innenkanten der Gehäuse-Einheit 21. Die Dimensionierungen sind so gewählt, dass die Spitzen 33 bündig in den Kanten so anliegen, dass dabei in allen Feder-Schenkeln 32 etwa gleiche Feder-Kräfte aufgebaut werden, die gesamthaft den Laufring 30 radial nach innen belasten. Hierdurch entsteht ein Druck, der die Kugeln 25 zwischen die Lauffläche 30' und den Antriebs-Bereich 24 ein wenig einpresst, so dass die Kugeln gegenüber diesen Flächen einen guten, auch über lange Dauer und variierende Bedingungen, insbesondere TemperaturWechsel, gleichmässig anhaltenden Reibkontakt erhalten.

Bei gewissen Ausführungen und Materialien kann es von Vorteil oder erforderlich sein, grössere Reibkräfte zwischen den Kugeln und Lauffläche zu erzeugen, z. B. dadurch, dass die Oberfläche der Kugeln bearbeitet, bzw. aufgerauht wird.

Zur besseren Führung der Kugeln 25 sind sowohl der Antriebs-Bereich 24 als auch die Lauffläche 30' im Querschnitt jeweils in Richtung der Kugeln 25 konkav vertieft. Diese Vertiefungen verbessern weiter das gesamthafte Zusammenhalten der zusammengebauten Getriebe-Einheit 11.

Die Einstell-Welle 23 ist bevorzugt aus Metall gefertigt, insbesondere aus Gründen der Haltbarkeit und Stabilität. Aus den gleichen Gründen bestehen auch die Kugeln 25 aus Metall, vor allem aus Stahl. Dem gegenüber bilden die Teile Kugelkäfig 27, Laufring-Element 29 und Gehäuse-Einheit 21 Spritzguss-Teile aus elektrisch nichtleitendem Kunststoff.

Der Aufbau der Getriebe-Einheit 11 aus derartigen Materialien ergibt günstige Herstellungskosten, lange Gebrauchsfähigkeit und vor allem eine sehr erhebliche Spannungsfestigkeit von mehreren Kilovolt, die den Normen EMC entspricht. Ausserdem erlaubt dieser Aufbau ein Miniaturisieren der Getriebe-Einheit bis zu Dimensionen von etwa 1 x 1 x 1 cm und weniger.

Die Gehäuse-Einheit 21 kann zylindrisch, kubisch oder kubisch mit Seitenansatz 46 wie durch die Figuren 1 bis 3 gezeigt, ausgebildet sein. Bevorzugt weist die Gehäuse-Einheit 21 neben dem Ende der Einstell-Welle 23 und deren Schlitz 22 ein Sichtfenster 44 auf, durch das jeweils eine Ziffer der Skalen-Scheibe 35 sichtbar ist.

Neben diesem Sichtfenster 44 kann ein weiterer transparenter Bereich angeordnet sein, über den und einen angrenzenden Lichtleiter 47 das von den Leuchtdioden 13, 14 ausgestrahlte Licht erkennbar ist. Eine Option besteht auch darin, als Material der Gehäuse-Einheit 21 einen transparenten Kunststoff vorzusehen.

Die Gehäuse-Einheit 21 ist unten offen und durch eine ebene, durchgehende Unterkante 49 abgeschlossen, mit der sie bündig auf dem Baugruppen-Träger 50 des elektrischen Bauelements 12 aufliegen kann.

Der Vorgang der Montage ist folgender: Nach der Fixierung des elektrischen Bauelements 12 und eventuell der Leuchtdioden 13, 14 auf dem Baugruppen-Träger 50, wird die zusammengebaute Getriebe-Einheit 11 so über das Bauelement 12 geschoben, dass das Kupplungselement 36 in Eingriff mit dem Schlitz 15 kommt. Am Ende des Zusammenbaus liegt die Gehäuse-Einheit 21 mit ihrer Unterkante 49 plan auf dem Baugruppen-Träger 50 auf und umschliesst das Bauelement 12 vollständig. In dieser Lage wird die Einheit 11 auf dem Träger 50 fixiert, beispielsweise durch Klebstoff, durch Stifte an der Unterkante 49 und zugeordnete Bohrungen im Träger 50 oder durch Verklemmen mit dem Bauelement 12.

Die Gehäuse-Einheit 21 kann jedoch auch integral mit dem Gehäuse des Instrumentes oder des Apparates gefertigt sein, in welches die zu bedienenden elektrischen/elektronischen Bauelemente eingebaut sind. In diesem Fall wird die Getriebe-Einheit analog wie weiter oben beschrieben in diese Gehäuse-Einheit eingebaut.

Es sind eine grosse Zahl von Varianten zu der beschriebenen Getriebe-Einheit möglich. Im Folgenden werden einige dieser Varianten aufgezählt:
- Die Kugeln 25 können aus Glas, Saphir oder Keramikmaterial gefertigt sein. In diesem Fall erhöht sich die elektrische Durchschlagsfestigkeit.
- Die Einstell-Welle 23 kann aus Kunststoff gefertigt sein.
- Das Laufring-Element 29 kann aus getrenntem Laufring 30 und separatem Halte- und Federbereich 31 gebildet sein. Beispielsweise könnte dieser Bereich 31 aus Federstahl gebogen und auf den Laufring 30 aufgeschnappt sein. Weiter sind Varianten bei der Gestaltung und der Anzahl der Feder-Schenkel 32 und der Spitzen 33 möglich, wobei jedoch keine grundsätzlichen Verbesserungen gegenüber der beschriebenen Ausführung resultieren.
- Die Skalen-Scheibe 35 und ihre Ablesungsart kann variiert werden, beispielsweise durch eine Strichskala.
- Durch Variation der Dimensionen der Durchmesser von Antriebs-Bereich 24, von Laufring 30 und der Kugeln 25 ist das Untersetzungs-Verhältnis veränderbar. Es ist ohne weiteres ein Drehungs-Verhältnis von 4 : 1 erreichbar.
- Die drehbare Halterung der Einstell-Welle 23 in der LagerÖffnung 43 kann anders als mit Hilfe eines O-Rings 41 durchgeführt werden, beispielsweise durch eine Gleitlager-Hülse.

Die erfindungsgemässe Getriebe-Einheit 11 erfüllt alle eingangs erwähnten Forderungen, insbesondere Robustheit, elektrische Spannungssicherheit, einfache Montierbarkeit, Langzeit-Tauglichkeit auch in rauher Umgebung.

Ein weiterer Vorteil besteht darin, dass die Getriebe-Einheit 11 keine Endanschläge aufweist. Dies ermöglicht die Ausnutzung der vollen Variationsbreite des jeweils zugeordneten elektrisch/elektronischen Bauelements 12.

## Patentansprüche

1. Getriebe-Einheit für die Verwendung mit einem manuell einstellbaren, elektrischen Bauelement (12) mit einer manuell bedienbaren Einstell-Welle (23) und einem Untersetzungsgetriebe mit einem drehbaren Kugelkäfig (27) und einer Mehrzahl von Kugeln (25) sowie einem Laufring-Element (29) mit einem laufring (30) und einem diesen aussen umfassenden Feder- und Halte-Bereich (31), der Gruppen aus jeweils zwei Feder-Schenkeln (32) aufweist, die (32) nach aussen konkav gebogen sind, die tangential in den Laufring (30) einmünden, und die (32) paarweise in jeweils einer Spitze (33) enden, deren (33) eingeschlossener Winkel deutlich kleiner ist als 90°.

2. Getriebe-Einheit nach Anspruch 1, **dadurch gekennzeichnet, dass** sie eine Gehäuse-Einheit (21) mit U-förmigem Querschnitt aufweist, mit einer Lageröffnung (43) im U-Bogen zum Lagern der Einstell-Welle (23) und HalteElemente im Inneren zum Fixieren des Laufring-Elementes (29).

3. Getriebe-Einheit nach Anspruch 2, **dadurch** gekenntzeichnet, dass zwischen der Einstell-Welle (23) und der Gehäuse-Einheit (21) ein Dichtmittel (41) angeordnet ist.

4. Getriebe-Einheit nach Anspruch 1, **dadurch gekennzeichnet, dass** vier symmetrisch verteilte Gruppen aus jeweils zwei Feder-Schenkeln (32) vorgesehen sind, die mit dem Laufring (30) eine homogene Einheit bilden.

5. Getriebe-Einheit nach Anspruch 1, **dadurch gekennzeichnet, dass** die Lauffläche (30') im Querschnitt konkav vertieft ist.

6. Getriebe-Einheit nach Anspruch 1, **dadurch gekennzeichnet, dass** das Untersetzungsgetriebe einem drehbaren Antriebs-Bereich (24), eine feststehende Lauffläche (30.') und der drehbare Kugelkäfig (27) mit einem Kupplungselement (36) zur kraftschlüssigen Verbindung mit dem elektrischen Bauelement 12 ausgerüstet ist und die Kugeln (25) durch den Kugelkäfig (27) geführt werden und zwischen dem Antriebs-Bereich (24) und der Lauffläche (30) zweiseitig antreibend angeordnet sind,

7. Getriebe-Einheit nach Anspruch 1, **dadurch gekennzeichnet, dass** das Laufring-Element (29) einen zentralen Laufring (30) mit nach innen gerichteter Lauffläche (30') aufweist.

8. Getriebe-Einheit nach Anspruch 2, **dadurch gekennzeichnet, dass** die Gehäuse-Einheit (21) im Inneren vier rechtwinklige Eckkanten aufweist, in die das Laufring-Element (29) mit seinen Spitzen (33) bündig einschiebbar ist, wobei die Dimensionierungen so gewählt sind, dass sich dabei in den Feder-Schenkeln (32) eine Feder-Spannung aufbaut.

9. Getriebe-Einheit nach Anspruch 2 mit Teilen aus Metall, Keramik oder Kunststoff, wobei die Einstell-Welle (23) vorzugsweise ein Metall-Teil ist und der Kugelkäfig (27), das Laufring-Element (29) und die Gehäuse-Einheit (21) vorzugsweise Spritzguss-Teile aus Kunststoff sind, um die elektrische Isolation zu gewährleisten.

10. Getriebe-Einheit nach Anspruch 9, **dadurch gekennzeichnet, dass** die Gehäuse-Einheit (21) zumindest teilweise durchsichtig ist.

11. Getriebe-Einheit (11) nach Anspruch 9, **dadurch gekennzeichnet, dass** die maximalen Dimensionen der Gehäuse-Einheit (21) in der Grössenordnung von 1 x 1 x 1 cm liegen.

12. Getriebe-Einheit nach einem der Ansprüche 1 bis 11, **dadurch gekennzeichnet, dass** die Oberfläche der Kugeln (25) bearbeitet ist, um eine grössere Reibung zu erzielen.

13. Verwendung der Getriebe-Einheit gemäss Anspruch 1, **dadurch gekennzeichnet, dass** nach Fixierung des manuell einstellbaren, elektrischen Bauelementes (12) auf einem elektronischen Baugruppenträger (50) die Getriebe-Einheit (11) so über das Bauelement (12) geschoben wird, dass sich das Kupplungselement (36) kraftschlüssig mit dem Bauelement (12) verbindet, und so weit, bis die Unterkanten (49) der Gehäuse-Einheit (21) bündig auf dem Baugruppenträger (50) aufliegen und sich durch ein Verbindungsmittel mit diesem starr verbinden.

14. Verwendung der Getriebe-Einheit nach Anspruch 13, **dadurch gekennzeichnet, dass** das Verbindungsmittel ein Klebstoff ist.

15. Verwendung der Getriebe-Einheit nach Anspruch 13, **dadurch gekennzeichnet, dass** das verbindungsmittel als Zapfen an den Unterkanten (49) der Gehäuse-Einheit (21) und zugeordnete Bohrungen am Baugruppenträger (50) ausgebildet sind..

## Claims

1. Gear unit for use with a manually adjustable electric component (12), comprising a manually operable adjusting shaft (23) and a reduction gear including a rotatable ball cage (27) and a plurality of balls (25) as well as a race ring element (29) having a race ring (30) and a spring and retaining portion that encircles the former externally and comprises groups of two spring legs (32) each, which (32) are bent outwards concavely, which connect to the race ring (30) tangentially, and pairs of which (32) end in respective apexes (33) whose (33) enclosed angle is significantly smaller than 90°.

2. Gear unit according to claim 1, **characterised in that** it comprises an enclosure unit (21) having a U-shaped cross-section that is provided in the bend of the U with a bearing opening (43) for supporting the adjusting shaft (23) and in its interior with retaining elements for fastening the race ring element (29).

3. Gear unit according to claim 2, **characterised in that** a sealing means (41) is arranged between the adjusting shaft (23) and the enclosure unit (21).

4. Gear unit according to claim 1, **characterised in that** four symmetrically arranged groups of two spring legs (32) each are provided which form a homogenous unit together with the race ring (30).

5. Gear unit according to claim 1, **characterised in that** the running surface (30') is concavely recessed in cross-section.

6. Gear unit according to claim 1, **characterised in that** the reduction gear has a rotatable drive portion (24) and a stationary running surface (30') and the rotatable ball cage (27) is provided with a coupling element (36) for a frictional connection to the electric component (12), and the balls (25) are guided by the ball cage (27) and arranged between the drive portion (24) and the running surface (30) in a two-sided driving manner.

7. Gear unit according to claim 1, **characterised in that** the race ring element (29) includes a central race ring (30) having an inwardly facing running surface (30').

8. Gear unit according to claim 2, **characterised in that** in its interior, the enclosure unit (21) has four orthogonal corner edges into which the race ring element (29) is insertable with its apexes (33) aligned thereto, the dimensions being chosen such that a spring tension builds up in the spring legs (32).

9. Gear unit according to claim 2 with parts of metal, ceramics, or plastics, wherein the adjusting shaft (23) is preferably a metal part and the ball cage (27), the race ring element (29) and the enclosure unit (21) are preferably injection-molded plastics parts in order to ensure electric insulation.

10. Gear unit according to claim 9, **characterised in that** the enclosure unit (21) is at least partially transparent.

11. Gear unit (11) according to claim 9, **characterised in that** the maximum dimensions of the enclosure unit (21) are in the order of 1 x 1 x 1 cm.

12. Gear unit according to one of claims 1 to 11, **characterised in that** the surface of the balls (25) is treated in order to achieve an increased friction.

13. Use of the gear unit according to claim 1, **characterised in that** after fastening the manually adjustable electric component (12) to an electronic component support (50), the gear unit (11) is pushed over the component (12) in such a manner that the coupling element (36) frictionally connects to the component (12) and until the lower edges (49) of the enclosure unit (21) contact the component support (50) in a planar manner and rigidly connect thereto by a connecting means.

14. Use of the gear unit according to claim 13, **characterised in that** the connecting means is an adhesive.

15. Use of the gear unit according to claim 13, **characterised in that** the connecting means is in the form of pegs on the lower edges (49) of the enclosure unit (21) and of associated bores in the component support (50).

## Revendications

1. Unité à engrenage pour utilisation avec un composant électrique (12) manuellement réglable, comprenant un arbre de réglage (23) manuellement actionnable et un engrenage réducteur avec une cage à billes (27) rotative et une pluralité de billes (25), ainsi qu'un élément à bague de roulement (29) avec une bague de roulement (30) et un ensemble à ressorts et de retenue (31) encerclant celle-ci extérieurement, lequel comprend des groupes à deux branches ressort (32), lesquelles (32) sont concavement incurvées vers l'extérieur, lesquelles rejoignent la bague de roulement (30) tangentiellement, et lesquelles (32) se terminent par paires dans des sommets (33) respectifs dont (33) l'angle inclus est nettement inférieur à 90°.

2. Unité à engrenage selon la revendication 1, **caractérisée en ce qu'**elle comporte une unité boîtier (21) de coupe transversale en U, munie d'une ouverture palier (43) dans l'arc de l'U pour supporter l'arbre de réglage (23) et d'éléments de retenue à l'intérieur pour fixer l'élément à bague de roulement (29).

3. Unité à engrenage selon la revendication 2, **caractérisée en ce qu'**entre l'arbre de réglage (23) et l'unité boîtier (21) est agencé un moyen d'étanchéité (41).

4. Unité à engrenage selon la revendication 1, **caractérisée en ce que** quatre groupes symétriquement distribués à deux branches ressort (32) sont prévus, lesquels forment une unité homogène avec la bague de roulement (30).

5. Unité à engrenage selon la revendication 1, **caractérisée en ce que** la surface de roulement (30') est concavement évidée en coupe transversale.

6. Unité à engrenage selon la revendication 1, **caractérisée en ce que** l'engrenage réducteur est muni d'une zone d'entraînement (24) rotative, d'une surface de roulement stationnaire (30') et la cage à billes (27) rotative d'un élément d'accouplement (36) pour la liaison par adhérence audit composant électrique (12), et que les billes (25) sont guidées par la cage à billes (27) et agencées entre la zone d'entraînement (24) et la surface de roulement (30) d'une manière bilatéralement motrice.

7. Unité à engrenage selon la revendication 1, **caractérisée en ce que** l'élément à bague de roulement (29) présente une bague de roulement (30) centrale ayant une surface de roulement (30') en regard vers l'intérieur.

8. Unité à engrenage selon la revendication 2, **caractérisée en ce que** l'unité boîtier (21) présente à l'intérieur quatre angles de coin rectangulaires dans lesquels l'élément à bague de roulement (29) est insérable avec ses sommets (33) à fleur, les dimensions étant choisies de telle manière qu'une tension élastique en résulte dans les branches ressort (32).

9. Unité à engrenage selon la revendication 2 avec des pièces en métal, céramique ou matériau synthétique, où l'arbre de réglage (23) est préférablement une pièce métallique et la cage à billes (27), l'élément à bague de roulement (29) et l'unité boîtier (21) sont préférablement des pièces injectées en matériau synthétique afin d'assurer l'isolation électrique.

10. Unité à engrenage selon la revendication 9, **caractérisée en ce que** l'unité boîtier (21) est au moins partiellement transparente.

11. Unité à engrenage (11) selon la revendication 9, **caractérisée en ce que** les dimensions maximales de l'unité boîtier (21) sont de l'ordre de 1 x 1 x 1 cm.

12. Unité à engrenage selon l'une des revendications 1 à 11, **caractérisée en ce que** la surface des billes (25) est traitée pour obtenir une friction plus importante.

13. Utilisation de l'unité à engrenage selon la revendication 1, **caractérisée en ce qu'**après la fixation du composant électrique (12) manuellement réglable sur un support de composants électroniques (50), l'unité à engrenage (11) est glissée sur le composant (12) de telle manière que l'élément d'accouplement (36) entre en liaison par adhérence avec le composant (12) et jusqu'à ce que les bords inférieurs (49) de l'unité boîtier (21) soient à fleur du support de composants (50) et rigidement reliés à celui-ci par des moyens de liaison.

14. Utilisation de l'unité à engrenage selon la revendication 13, **caractérisée en ce que** le moyen de liaison est un adhésif.

15. Utilisation de l'unité à engrenage selon la revendication 13, **caractérisée en ce que** le moyen de liaison est réalisé sous la forme de tenons aux bords inférieurs (49) de l'unité boîtier (21) et de perçages associés dans le support de composants (50).
